# EUROPEAN PATENT APPLICATION

(11) **EP 2 684 671 A2**
(43) Date of publication of application: **15.01.2014**
(21) Application number: 12754252.0
(22) Date of filing: 29.02.2012
(51) Int. Cl.: B29C 47/06

(54) **EXTRUSION METHOD FOR PRODUCING A FLAT FIBRE MADE FROM SYNTHETIC RAW MATERIAL**

(30) Priority: 09.03.2011 RU 2011108894
(71) Applicant: Dokukin, Aleksey Nikolaevitch, Rostov-na-Donu 344034 (RU)
(72) Inventor: Dokukin, Aleksey Nikolaevitch, Rostov-na-Donu 344034 (RU)
(74) Representative: Benatov, Emil Gabriel
(86) International application number: PCT/RU2012/000144
(87) International publication number: WO 2012/121624

(57) **Abstract**

The invention relates to polymer processing methods and, in particular, to methods for producing flat synthetic fibers with predetermined characteristics by means of polymer extrusion. The flat synthetic fiber produced using this method can be used for different purposes in many branches of industry. It can be used, for example, in the weaving industry and the food industry and as a packaging material, and can compare favourably with known fibers as a result of its high durability and resistance to the effects of petrol and moisture, as well as being reusable. Furthermore, the flat synthetic fiber can be used in radio electronics, the instrumentation industry and other branches of industry. The objective set by the designer of this novel extrusion method for producing flat fibers from synthetic raw material was to devise an extrusion method for producing flat fibers made from synthetic raw material which would make it possible to reduce the cost of manufacturing said flat fibers by using cheap or recycled material without drastically reducing the durability of the fiber or other properties necessary to specific types of fibers, thus making it possible to use the fibers produced using the novel method in the manufacture of products for different purposes. The technical result achieved in the process of solving the above problem is the possibility of forming layers with predetermined properties in a flat fiber made from synthetic raw material and produced using cheaper or recycled material.; The essence of the invention is that the extrusion method for producing a flat fiber from synthetic raw material involves forming at least two melts with different properties, distributing these melts across at least three layers to form a synthetic film, cooling said film, cutting the film into strips, stretching the cut strips to form fibers and winding the resultant fibers onto cores. Furthermore, the essence of the invention is that synthetic raw material is used in the form of granules, powder or an agglomerate, and the resultant film is cooled in a water-filled bath, wherein after the film has been cooled, water is removed from the surface thereof.; The inner layer is formed with a filler based on calcium carbonate in the amount of 0.1-50% of the mass of the main raw material of the inner layer, and one of the melts is formed using polypropylene with a melt flow rate of less than 2.8g/10.0 min. according to the Standard Test Method for Flow Rates of Thermoplastics by Extrusion Plastometer (ASTM 1238-90b).

## Description

The invention relates to polymer processing methods and, in particular, to methods for producing flat synthetic fibers with predetermined characteristics by means of polymer extrusion. The flat synthetic fiber produced using this method can be used for different purposes in many branches of industry. It can be used, for example, in the weaving industry and the food industry and as a packaging material, and can compare favourably with known fibers as a result of its high durability and resistance to the effects of petrol and moisture, as well as being reusable. Furthermore, the flat synthetic fiber can be used in radio electronics, the instrumentation industry and other branches of industry.

Various extrusion methods for producing flat fiber from synthetic raw material are known. For example, extrusion method for producing flat fiber from synthetic raw material is known (see http://www.ligatek.ru/extruders/jcfy-s.htm). The mentioned method is fulfilled through the line described on this web-site, and it includes flat die and continuous filtration system that allow production of flat fiber. This line produces film of equal thickness over the whole film width. After fibrillation the fiber is used for production of twines, ropes, cable fillers, basis for carpet backing, and artificial verdant grass. Bath with hot water included into the line is completely insulated for reduction of thermal losses and power consumption. Furnace with hot air is completely insulated, and equipped with two zones of automatic temperature control and air duct. It operates according to convection principle that provides temperature consistency and safe heat distribution. Annealing furnace with hot air reduces internal fiber tension during the process that increases fiber quality. The line includes extrusion machine. Screw of extrusion machine provides necessary quality of melting, mixing and extrusion. Automatic temperature control reduces power consumption and maintains constant level of temperature with low fluctuation level (±1.0°C). Cylinder of extrusion machine is completely insulated and equipped with cooling fan. Gear-type pump is designed for sequential extrusion of melted polymeric material. Check of pressure is performed before and after pump. Pressure must be controlled before gear-type pump in order to improve extrusion sequence and quality of fiber. Quench water bath is developed for smoothing water flow, maintenance of constant water temperature, and elimination of agitation on the water surface. Bath can be moved in horizontal and vertical directions. The line also includes fiber-pulling device. Extrusion method for producing synthetic flat fibers fulfilled through the line being advertised on the web-site allows obtaining single-layer flat fibers for their further applications, for example, in weaving factory. But such a method for manufacturing extruded synthetic flat fibers has some disadvantages. Main disadvantages of this extrusion method for producing synthetic flat fibers, as an analogue, are high cost of synthetic flat fibers produced through such a method, and their reduced strength properties.

Method for producing flat fiber from synthetic raw material is also known (see http://articles.pakkermash.ru/show art.php?art=179). The mentioned method is fulfilled through the line being advertised on the web-site. This line includes extruder that provides optimum melt homogenization and moves it towards flat die. The flat die provides minimum deviations of melt thickness and optimum mass distribution of across its width. Other constructive features of the extruder are possibility to feed raw material through plug with grooves and protection from cold start. Microprocessor-based operating controllers, indicators of melt temperature and back pressure are used in the extruder, and, if necessary, pneumatically driven movement of extruder along rails. If melt filter before the flat die should be changed , in view of defective raw material, including use of recycled raw material, or incorrect adjustment of melting characteristics, or after screw change, or transfer to another type of raw material, automatic device of filter change instead of manual one is used for minimization of line stops. Mesh movement is controlled by timer, and speed by through operator. The worked-out filter is changed through manual or automatic turn of wheel to another one directly during operation of line. Suction device provides output of completely dry film in cooling system through water bath, even at high speeds. Flat film that going out of die and being cooled is cut into strips in turning device for longitudinal cutting. Then strips are fed through press rolls and automatic thermo controllers to air orientation system, or double system of non-contact air extraction and heating. Then the bands proceed to the combined stretching and shrinkage unit, with independent drives. Shrinkage is prevented and stress is relieved on the combined unit, and already flat fibers proceed to winding unit. Winding unit is equipped with three pairs of rolls - of hot, normal and cold temperature, operating with variable speed. During production of common flat fibers, a combination of hot, neutral or cold rolls is offered. The rolls being cooled by water provide constant temperature of flat fibers proceeding to winding unit. During production of fibrillated flat fibers, the line is equipped with fibrillator located between orientation air furnace and combined stretching and shrinkage unit. Needle roll of the fibrillator is equipped with independent drive, and needles are made with possibility of adjustment in accordance with required fibrillation structure. Modular construction of the device allows production of both fibrillated and non-fibrillated strips simultaneously. Winding unit provides obtaining of reels with winded-on flat fibers of the required quality and colour, and in case of automatic process it provides automatic change of winded reels by empty ones. Extrusion method for producing synthetic flat fibers that is fulfilled through the line being advertised on the web-site allows obtaining single-layer flat fibers for their further application, for example, in weaving factory. But this extrusion method for producing synthetic flat fibers has some disadvantages. Main disadvantages of the known extrusion method for producing synthetic flat fibers, as an analogue, are high cost of synthetic flat fibers produced through such a method, and reduced strength properties.

Moreover, extrusion method for producing flat fiber from synthetic raw material fulfilled through the line being advertised on the web-site is known (see http://www.textileclub.ru/index.php?option=articles&task=viewarticle &artid=324&Itemid=55). The line includes the following main processing equipment. First of all, extruder with charging hopper, pressure adjusting pump, and drive. The line also includes filter for melt, flat die, bath with cooling water, and receiving shafts, which are installed after bath. The described line has also feature for film cutting into separate strips. The line also includes stretching shafts, while their number and degree of stretching on each shaft depend on the specified functional properties of flat fiber. The line also includes suction device and transportation device for edge bands. The line also includes chamber for stretching in hot air environment and wind-up device. Peculiarity of this line is a special adiabatic extruder with adjusting output pressure. Extrusion system consists of extruder with 90 mm screw of 27D length, performed with special geometrical boundary, continuously operating band mesh filter, and special pump allowing pressure adjustment during the extrusion process. Extruder provides uniform polymer melting with high degree of melt homogenization. Pump creates the required pressure supplying flat die with melt. Rotation speed of screw corresponds to the assigned pressure before and after pump adjustment. In view of constant pump pressure being maintained through the chosen level of screw rotation speed, melt pressure to flat die also remains constant. If capacity is increased, the combination of adiabatic extruder with dosing pump gives some technical advantages. Due to such a pump, extruder continues to operate efficiently at very high performance, up to 500-550 kg/h, at low back pressure of melt. The pump increases pressure from input 50 bar to output 200 bar to flat die. Extruder screw is designed especially for implementation of high-capacity process with regard to obtaining high-quality and well homogenized melt, and operates at speed up to 280 rpm. Melting temperature of polymers, in spite of high capacity and high rotary speed of screw, does not exceed 220°C. As a rule, melting temperature reaches 240-260°C, if extruder with another screw geometry, and pump that does not build up pressure, are used. Due to lower melting temperature, polymer preserves the qualities necessary for producing high quality flat fiber, in particular, due to minimum polymer destruction that allows achieving low gage interference and better stretchability of the strips being cut. Except main processing equipment listed above, the line for production of tape yarns of required production assortment and quality is also fully equipped with the following main and auxiliary devices: volumetric and gravimetric dosing devices for four and more components, mechanisms for measurement of film thickness, fibrillation and ionization units, ejection or vacuum suction system. Various fields of application of tape yarns impose various technologies for further processing, for example, on circular weaving and needle looms, spinning, needle-stitch process, and platting. Kinds of further processing and fiber features determine the requirements to its winding. Characteristic parameters herewith are size of finished reel and core, and process requirements to bobbin ends, just as like to stretching and speed of winding. Tape yarns for processing on the circular weaving machines are used most of all. This line has also a number of advantages, except the above listed, among which the following can be noted. First of all, it is high velocity potential up to 450 m/min, low power consumption, and low heat loss of electric motors.

But the above described extrusion method for producing synthetic flat fibers has some disadvantages. Main disadvantages of the known extrusion method for producing synthetic flat fibers, as the previous analogue, are high cost of flat synthetic fibers produced through such a method, and reduced strength properties.

Moreover, extrusion method for producing flat fiber form synthetic raw material is known (see Patent of Great Britain No. 1243512 dated August 09, 1968, IPC 9 D06M 17/00). This extrusion method for producing flat fiber from synthetic raw material is the closest by its technical nature and achieved results, compared to the claimed method (a prototype). Extrusion prototype method for producing flat fiber from synthetic raw material includes at least formation of two melts with different properties and distribution of these melts at least into three layers for the formation of synthetic film. Prototype method includes also cooling of the obtained film, its cutting into strips, and stretching the cut strips for fiber formation, and winding fibers obtained through such a method onto cores.

But this closest analogue (prototype) has the same disadvantages as the above described analogues. Disadvantages of the described closest extrusion method for producing flat fiber from synthetic raw material are as follows. Since synthetic raw materials, such as, for example, polypropylene or polyethylene, are much more expensive than such materials as calcium carbonate, calcium stearate, or talc, for cheapening yarn, additives on the basis of calcium carbonate, calcium stearate, talc, etc. are generally applied. Recently, organic calcium carbonate was put as additive in the form of ground cattle bones and fish bones, in order to utilize them and thus reduce the costs of synthetic flat fiber. But particles, for example, of calcium carbonate (CaCO₃), appear on the surface of the film obtained during the common technological process. The film will be cut into flat strips and from these fibers are then obtained with rough surface. Particles of calcium carbonate (CaCO₃) appearing on the surface of the finished fiber possess significant abrasive properties. This results in additional wear of equipment components which will contact fiber, for example, working parts of weaving machine. It is determined by the fact that fiber contacts actively with parts of the weaving machine minimum in five places, where particles, for example, calcium carbonate or stearate will accumulate. Moreover, particles of calcium carbonate or stearate are able to work out of the fiber surface layer in great amounts with all ensuing consequences. First of all, particles of calcium carbonate worked out of surface layer form dust that increases additionally wear of rotating parts of machines proceeding there. These particles of calcium carbonate or stearate also ingress into bearings deactivating them untimely. Besides, particles of calcium carbonate ingress into various electric devices of weaving machine causing short circuit of electric line, and eventually stop the operation of weaving line. Moreover, the same dust of calcium carbonate, so called "chalk dust", mixing with air deteriorate abruptly occupational safety and health conditions of maintenance staff with regard to labor protection and safety regulations. Additional equipment, first of all, for air cleaning is required, including forced exhaust ventilation in order to reduce air contamination to limit values defined by standard regulations. In its turn, this increases prime cost of flat synthetic fiber. It should also be noted that white particles of chalk reduce intensity of coloured pigment that is usually put for staining flat synthetic fiber. Accordingly, amount of coloured pigment must be increased in quantitative ratio approximately three times more than for the fiber without calcium carbonate. But coloured pigment is much more expensive than calcium carbonate and polymers; that also causes increase of prime cost of flat synthetic fiber. Moreover, extrusion melt is cooled, as a rule, in water bath in the course of technological process in order to produce the film. Since rough surface facilitates retention of great quantity of water on the film surface, removal of this water is technically aggravated. As a result, additional time-consuming operations for water elimination are required in the whole technological process that results in growing cost of technological process and consequently prime cost rising of flat synthetic fiber. If film cooling is performed of the cooling shafts, wear of cooling shafts is increased in this case because of abrasive properties of calcium carbonate particles appearing on the film surface. Moreover, it should be specially emphasized that putting of calcium carbonate into synthetic raw material for production of flat synthetic fiber in any case predetermines reduction of strength properties of flat fiber, with all ensuing consequences. From the above we can see that main disadvantages of the known extrusion method for producing synthetic flat fibers as the closest analogue (prototype) are high cost of flat synthetic fibers produced through such a method, and reduced strength properties.

The task set before the developer of new extrusion method for producing flat fibers from synthetic raw material consisted in creation of such an extrusion method for producing flat fibers from synthetic raw material that would allow reduction of fabrication cost for flat fibers from synthetic raw material due to application of cheap or recycled material, without sharp decrease in strength and other properties required for a certain kind of fibers. As a result it would allow application of fibers produced through a new method for production of articles for various purposes. Technical result achieved in the process of the task solution by development contractors was possibility of forming layers in flat fiber from synthetic material with specified properties using cheaper or recycled materials.

Essence of the invention lies in the fact that synthetic raw material is used in the form of granules, powder, or agglomerate within the extrusion method for producing flat fiber from synthetic raw material, including formation at least of two melts with various properties, and distribution of these melts at least by three layers for the forming synthetic film, and cooling this film, cutting it into strips, stretching these strips for forming fibers, and winding of fibers obtained in such a method to cores, and the obtained film is cooled in bath with water, whereas removal of water form film surface is performed after film cooling , and inner layer is formed with filler on calcium carbonate basis in quantity of 0.1-50% by weight of main raw material of inner layer.

Moreover, essence of the invention consists also in the fact that cooling of melt mass is performed on the cooling shafts within the extrusion method for producing flat fiber from synthetic raw material.

Furthermore, essence of the invention consists also in the fact that inner layer is formed with filler on organic calcium carbonate basis within the extrusion method for producing flat fiber from synthetic raw material.

Moreover, essence of the invention consists also in the fact that one of the melts is formed with colouring agent whereas it is distributed evenly over external layers within the extrusion method for producing flat fiber from synthetic raw material.

Furthermore, essence of the invention consists also in the fact that colouring agent is included in quantity of 0.1-15.0% of weight of main raw materials of the external layer within the extrusion method for producing flat fiber from synthetic raw material.

Moreover, essence of the invention consists also in the fact that one of the melts is formed with reinforcement additives within the extrusion method for producing flat fiber from synthetic raw material.

Furthermore, essence of the invention consists also in the fact that one of melts is formed from a polymer with higher breaking characteristics than a polymer used during production of other layers within the extrusion method for producing flat fiber from synthetic raw material.

Moreover, essence of the invention consists also in the fact that one of melts is formed with use of polypropylene with melt flow rate (MFR) less than 2.8 g/10.0 min, according to Standard method for determination of melt flow rate by means of extrusion plastometer (ASTM 1238-90b) within the extrusion method for producing flat fiber from synthetic raw material.

Furthermore, essence of the invention consists also in the fact that fibrillation of strips is performed after cutting film within the extrusion method for producing flat fiber from synthetic raw material.

Moreover, essence of the invention consists also in the fact that fibrillation of strips and subsequent fiber twisting are performed after cutting film within the extrusion method for producing flat fiber from synthetic raw material.

Furthermore, essence of the invention consists also in the fact that fibrillation of strips and subsequent fiber oiling are performed after cutting film within the extrusion method for producing flat fiber from synthetic raw material.

Moreover, essence of the invention consists also in the fact that stretching of strips is performed in several stages within the extrusion method for producing flat fiber from synthetic raw material.

Furthermore, essence of the invention consists also in the fact that fiber is subject to forced shrinkage after stretching within the extrusion method for producing flat fiber from synthetic raw material.

Moreover, essence of the invention consists also in the fact that forced shrinkage of fiber is performed in several stages within the extrusion method for producing flat fiber from synthetic raw material.

Evidence of possible implementation of the claimed extrusion method for producing synthetic flat fibers with fulfillment of the mentioned purpose are given below on certain examples of extrusion method for producing synthetic flat fibers. These characteristic examples of certain methods for producing synthetic flat fibers according to the offered invention do not limit by no means scope of legal protection of the invention. These certain examples show illustration only of new extrusion method for producing synthetic flat fibers.

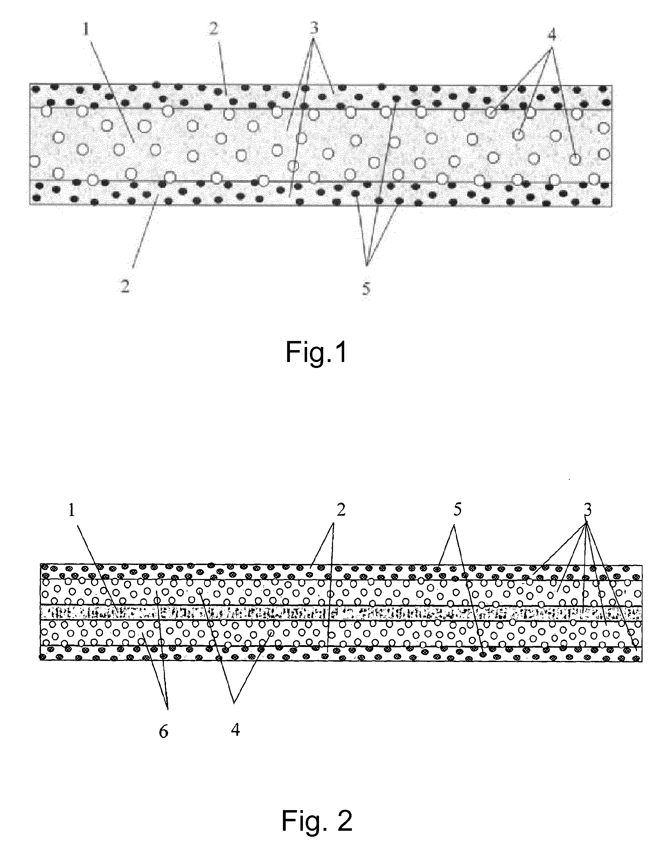

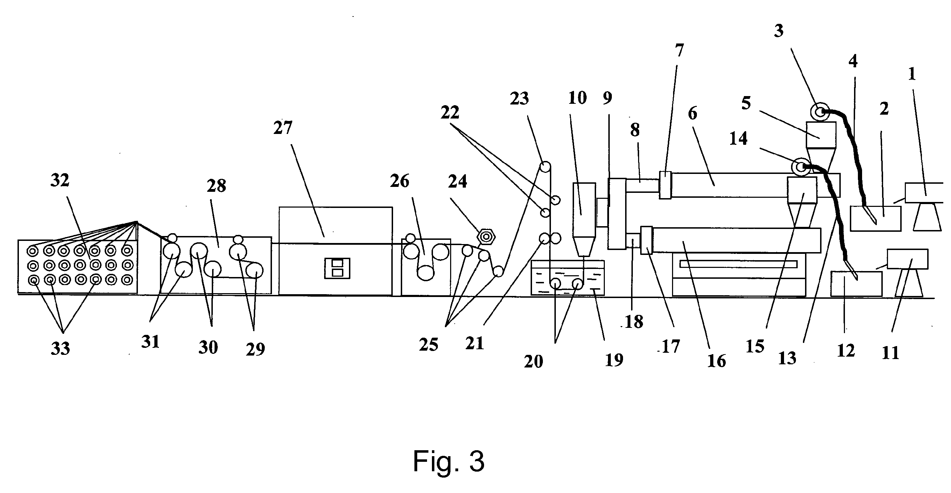

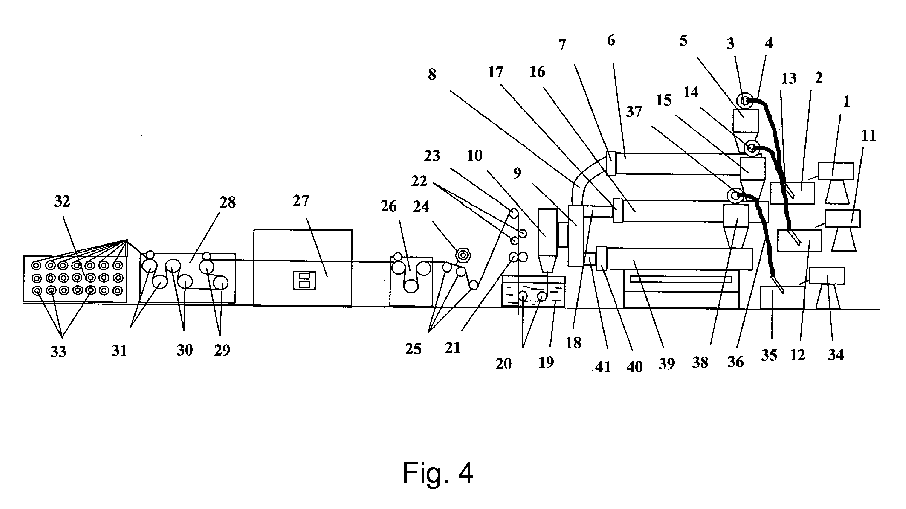

Extrusion methods for producing flat fiber from synthetic raw material, presented as certain examples of the invention, are explained in diagrams, where:
Cross-section view of three-layer flat fiber from synthetic raw material containing calcium carbonate (CaCO₃) in the inner layer, and colour superconcentrate in the external layers, obtained through the proposed method is shown in Fig. 1;
Cross-section view of five-layer flat fiber from synthetic raw material, obtained through the proposed method is shown in Fig. 2;
Production line for the three-layer flat fiber from synthetic raw material according to the proposed method is shown in Fig. 3;
Production line for the five-layer flat fiber from synthetic raw material according to the proposed method is shown in Fig. 4.

Cross-section view of three-layer flat fiber from synthetic raw material is shown in Fig. 1, where:
1 - internal layer;
2 - external layer;
3 - polymer;
4 - particles of calcium carbonate (CaCO₃);
5 - particles of coloured pigment.

Line for implementation of novel extrusion method for obtaining three-layer flat fiber from synthetic raw material represents a series of sequential and parallel installed equipment units (see Fig. 3). Mixer 6 is installed at the beginning of the line; it comprises a container of cylinder form with blades located inside for "dry" mixing of components. Blades rotation is performed by asynchronous motor through planet reduction gear (not shown in the drawing). Mixer tray 6 for unloading of the mixed components is located over the metal box 7. The box 7 is designed for collection of ready raw mixture from mixer 6. The box 7 is connected to vacuum loader 8 through flexible pipeline 9. Hopper 10 is located under vacuum loader 8; it is installed onto the loading part of screw and cylinder part of extruder 11. Extruder 11 is a material cylinder with screw inside it. Screw is connected with asynchronous motor with possibility to control the inverter through reduction gear. Heating elements operated through thermal controllers are located above the material cylinder; the controllers provide heating of the material cylinder, screw, and as consequence, raw material proceeded to extruder. Filter unit 12 is located on the output part of cylinder of extruder; it is designed for filtration of melt through close-meshed metal lath installed inside the unit. Filter unit 12 is connected through connector 13 to adapter-distributor 14. Adapter-distributor 14 is a device with channels for feeding and distribution of melts by layers in three-layer flat die 15. The following units are located similarly and in parallel to units described above: mixer 16, box 17, pipeline 18, vacuum loader 19, hopper 20, screw and cylinder part 21, filter unit 22, connector 23. Connector 23 is connected like connector 13 to adapter-distributor 14. Adapter-distributor 14 is connected to three-layer flat die 15 where channels for distribution and combination of melt layers over the whole length of die are performed. Cooling bath 24 is located under die; it represents a rectangular metal container with two inner metal non-rotating shafts 25, and water supply and circulation system. Cooling bath 24 filled with water is designed for cooling melt for the formation of film. Water expression roll unit 26 is located above bath; it consists of two rolls with rubber coating designed for removal of water form film surface, and of pneumatic system for roll pressing. Water expression roll unit 26 is connected with asynchronous electric motor controlled by invertor through reduction gear. Pipes for moisture elimination 27 are located above water expression roll unit 26; they are designed for elimination of residual moisture from film surface. Pipes for moisture elimination 27 are equipped with slots for capturing moisture and are connected through flexible hoses to aspirator fan. By-pass roll 28 is located above pipes for moisture elimination 27; it is designed for guiding film to cutting unit 29. Cutting unit 29 is located above by-pass rolls 30; it represents a metal shaft with thread and nut onto which metal or plastic rings are put. Cutting elements are located between rings. Rings of the shaft are fastened with nut. Shaft of cutting unit 29 is located transversely to film, whereas cutting elements of cutting unit 29 are located with possibility of cutting film into strips. Take-up shaft unit 31 is installed following by-pass rolls 30; it is a stand with metal shafts installed on it. These shafts are connected with asynchronous electric motor controlled by invertor through reduction gear. Stretching furnace 32 is a non-hermetic metal case with opening cover inside of which heating elements and asynchronous electric motor with blades on rotor axis are located; the elements are operated by thermal controllers. Space for tape passage is provided between cover and case. Shaft unit 33 is installed following stretching furnace 32; the unit consists of group of stretching shafts 34, and shrinkage shafts 35 and 36. Whereas shafts 35 are equipped with system for heating shaft surface to some certain temperature, and shafts 36 are equipped with cooling system. Following these, winding station 37 is installed; it is a stand where properly winders 38 are located. Number of winders depends on the number of produced fibers. Winders 38 are the plate with rolls for passing fibers installed on it, the axis for fixation of core, and changing device. Each of winders 38 is connected with asynchronous electric motor.

The line for implementation of new extrusion method for obtaining three-layer flat fiber from synthetic raw material operates in the following manner.

Polypropylene and colouring agent are filled in the form of superconcentrate granules with measuring container into mixer 6, where "dry" mixing is performed. Mixing time is set through timer. The prepared mixture is dumped in box 7. Mixture of components is continuously taken from box 7 by means of vacuum loader 8 over pipeline 9, and is fed into hopper 10. Mixture is brought to necessary humidity in the hopper 10 equipped with raw material drying system and magnetic trap for metal inclusions; accidentally fallen metal inclusions are removed. Mixture of synthetic raw material is fed from hopper 10 into screw and cylinder zone 11 of extruder for compacting and warming up. Then warmed up synthetic raw material is converted to melt for forming external layers of three-layer film. The obtained melt is fed under pressure from screw and cylinder zone 11 into filter unit 12, where unwanted inclusions are filtered from melt. Filtered melt proceeds from filter unit 12 through connector 13 to the channel of adapter-distributor 14, corresponding to external layers. Melt proceeds from the channel of external layers of adapter-distributor 14 to channels for forming external layers of three-layer die 15. Similarly, polypropylene and additive on the calcium carbonate (CaCO₃) basis are poured in the form of granules with measuring container into mixer 16, where "dry" mixing is performed. The prepared mixture is dumped into box 17. Mixture of components is continuously taken from box 17 by means of vacuum loader 19 over pipeline 18, and is fed into hopper 20. Mixture is brought to necessary humidity in the hopper 20 equipped with raw material drying system and magnetic trap for metal inclusions; accidentally fallen metal inclusions are removed. Mixture of synthetic raw material is fed from hopper 20 into screw and cylinder zone 21 of extruder for compacting and warming up. Then warmed up synthetic raw material is converted to melt for forming internal layer of three-layer film. The obtained melt is fed under pressure from screw and cylinder zone 21 into filter unit 22, where unwanted inclusions are filtered from melt. Filtered melt proceeds from filter unit 22 through connector 23 to the channel of adapter-distributor 14, corresponding to internal layer. Melt proceeds from the channel of internal layer of adapter-distributor 14 to channel for forming internal layer of three-layer die 15. All three layers of melt come out simultaneously from bushing part of three-layer die 15 without mixing but joined together. Melts will be distributed in the following manner: external layer - internal layer - external layer. Melt produced through such a method is fed to bath 24 filled with cooling water, where it is cooled. Cooled-down melt forms three-layer film that is guided closer to the bottom part of bath 24 through stationary shafts 25 for increasing path and as a result, good film cooling. Then the produced film is passed through water expression roll unit 26 with rubber coating that removes water from film surface. Residual moisture is removed on pipes 27 for moisture elimination from film surface. Film is fed to the group of take-up shafts 31 through by-pass roll 28, and then through by-pass rolls 30. Film is easily cut into strips of the given width by means of blades on cutting unit 29 as film is stretched between rolls 26 and 31; that is why three-layer flat strips proceed to by-pass rolls 31. Then flat strips are subject to the process of multiple stretching. Strips are directed from take-up rolls 31 through stretching furnace 32 to the group of stretching rollers 34 of roller unit 33. Rotation speed of stretching rollers group 34 is several times higher than speed of by-pass rolls 31; that is why film stretching is performed in hot air environment of stretching furnace 32 with increase of length and reduction of thickness depending on stretching rate. Air is warmed up in the furnace 32 through heating elements and fed to strip passage space. Rotating blades in furnace make air circulate from heating area to strip passage space and back. Now therefore strips are converted to fibers with molecular chains oriented in longitudinal direction that gives them additional strength. Fibers produced in the stretching process have inner stresses of molecular structure that are relieved through shrinkage process. That is why fibers are fed from group of stretching rollers 34 to hot rolls group 35, and then to cold rolls group 36. Rotation speed of hot rolls group 35 equals to rotation speed of stretching rollers 34. And rotation speed of cold rolls group 36 is by 5% lower than rotation speed of hot rolls group 35. On contacting with surface of hot rolls group, fiber is heated, while speed difference between rolls 35 and 36 facilitates process of relieving inner stresses of fiber molecular structure . In such a manner process of fiber shrinkage is performed; fiber is reduced in length by 5%. On contacting with surface of cold rolls group 36 fiber is cooled down; hence molecular structure of fiber is stabilized finally. Finished fibers are fed to winding station 37, where winding fibers to cores is performed through winders 38. Now therefore three-layer flat fibers wound on cores are produced.

Cross-section view of five-layer flat fiber from synthetic raw material is shown in Fig. 2, where:
1 - internal layer;
2 - external layers;
3 - polymer;
4 - particles of calcium carbonate (CaCO₃);
5 - particles of coloured pigment;
39 - middle layers.

Line for implementation of novel extrusion method for obtaining five-layer flat fiber from synthetic raw material represents a series of equipment units installed sequential and parallel (see Fig. 4). Mixer 6 is installed at the beginning of the line; it comprises a container of cylinder form with blades located inside for "dry" mixing of components. Blades rotation is performed by asynchronous motor through planet reduction gear. Mixing time is set through timer. Mixer tray 6 for unloading of the mixed components is located over the metal box 7. The box 7 is designed for collection of ready raw mixture from mixer 6. The box 7 is connected to vacuum loader 8 through flexible pipeline 9. Hopper 10 is located under vacuum loader 8; it is installed onto the loading part of screw and cylinder part of extruder 11. Extruder 11 is a material cylinder with screw inside it. Screw is connected with asynchronous motor with possibility to control the inverter through reduction gear. Heating elements operated through thermal controllers are located above the material cylinder; the controllers provide heating of the material cylinder, screw, and as consequence, raw material proceeded to extruder. Filter unit 12 is located on the output part of cylinder of extruder; it is designed for filtration of melt through close-meshed metal lath installed inside the unit. Filter unit 12 is connected through connector 13 to adapter-distributor 14. Adapter-distributor 14 is a device with channels for feeding and distribution of melts by layers in five-layer flat die 15. The following units are located similarly and in parallel to units described above: mixer 16, box 17, pipeline 18, vacuum loader 19, hopper 20, screw and cylinder part 21, filter unit 22, connector 23. Connector 23 is connected like connector 13 to adapter-distributor 14. The following units are also located similarly and in parallel to units described above: mixer 40, box 41, pipeline 42, vacuum loader 43, hopper 44, screw and cylinder part 45, filter unit 46, connector 47. Connector 47 is connected like connector 13 to adapter-distributor 14. Adapter-distributor 14 is connected to five-layer flat die 15, where channels for distribution and combination of five melt layers over the whole length of die are performed. Cooling bath 24 is located under die; it represents a rectangular metal container with two inner metal non-rotating shafts 25, and water supply and circulation system. Cooling bath 24 filled with water is designed for cooling melt for the formation of film. Water expression roll unit 26 is located above bath; it consists of two rolls with rubber coating designed for removal of water form film surface and pneumatic system for roll pressing. Water expression roll unit 26 is connected with asynchronous electric motor controlled by invertor through reduction gear. Pipes for moisture elimination 27 are located above water expression roll unit 26; they are designed for elimination of residual moisture from film surface. Pipes for moisture elimination 27 are equipped with slots for capturing moisture and are connected through flexible hoses to aspirator fan. By-pass roll 28 is located above pipes for moisture elimination 27; it is designed for guiding film to cutting unit 29. Cutting unit 29 is located above by-pass rolls 30; it represents a metal shaft with thread and nut onto which metal or plastic rings are put. Cutting elements are located between rings. Rings of the shaft are fastened with nut. Shaft of cutting unit 29 is located transversely to film, whereas cutting elements of cutting unit 29 are located with possibility of cutting of film into strips. Take-up shaft unit 31 is installed following by-pass rolls 30; it is a stand with metal shafts installed on it. These shafts are connected with asynchronous electric motor controlled by invertor through reduction gear. Stretching furnace 32 is a non-hermetic metal case with opening cover inside of which heating elements and asynchronous electric motor with blades on rotor axis are located; the elements are operated by thermal controllers. Space for tape passage is provided between cover and case. Shaft unit 33 is installed following stretching furnace 32; the unit consists of group of stretching shafts 34, and shrinkage shafts 35 and 36. Whereas shafts 35 are equipped with system for heating shaft surface to some certain temperature, and shafts 36 are equipped with cooling system. Following these, winding station 37 is installed; it is a stand where properly winders 38 are located. Number of winders depends on the number of produced fibers. Winders 38 are the plate with rolls for passing fibers installed on it, the axis for fixation of core, and changing device. Each of winders 38 is connected with asynchronous electric motor. The line for implementation of new extrusion method for producing five-layer flat fiber from synthetic raw material operates in the following manner.

Polypropylene and colouring agent are filled in the form of superconcentrate granules with measuring container into mixer 6, where "dry" mixing is performed. The prepared mixture is dumped in box 7. Mixture of components is continuously taken from box 7 by means of vacuum loader 8 over pipeline 9, and is fed into hopper 10. Mixture is brought to necessary humidity in the hopper 10 equipped with raw material drying system and magnetic trap for metal inclusions; accidentally fallen metal inclusions are removed. Mixture of synthetic raw material is fed from hopper 10 into screw and cylinder zone 11 of extruder for compacting and warming up. Then warmed up synthetic raw material is converted to melt for forming external layers of five-layer film. The obtained melt is fed under pressure from screw and cylinder zone 11 into filter unit 12, where unwanted inclusions are filtered from melt. Filtered melt proceeds from filter unit 12 through connector 13 to the channel of adapter-distributor 14, corresponding to external layers. Melt proceeds from the channel of external layers of adapter-distributor 14 to channels for forming external layers of five-layer die 15. Similarly, polypropylene and additive on the calcium carbonate (CaCO₃) basis are poured in the form of granules with measuring container into mixer 16, where "dry" mixing is performed. The prepared mixture is dumped into box 17. Mixture of components is continuously taken from box 17 by means of vacuum loader 19 over pipeline 18, and fed into hopper 20. Mixture is brought to necessary humidity in the hopper 20 equipped with raw material drying system and magnetic trap for metal inclusions; accidentally fallen metal inclusions are removed. Mixture of synthetic raw material is fed from hopper 20 into screw and cylinder zone 21 of extruder for compacting and warming up. Then warmed up synthetic raw material is converted to melt for forming middle layers of five-layer film. The obtained melt is fed under pressure from screw and cylinder zone 21 into filter unit 22, where unwanted inclusions are filtered from melt. Filtered melt proceeds from filter unit 22 through connector 23 to the channel of adapter-distributor 14, corresponding to middle layers. Melt proceeds from the channel of middle layers of adapter-distributor 14 to channels for forming middle layers of five-layer die 15. In the same manner, polypropylene of one or several grades is poured in the form of granules with measuring container into mixer 40, where "dry" mixing is performed. The prepared mixture is dumped into box 41. Mixture of components is taken continuously from box 41 through vacuum loader 43 over pipeline 42, and fed into hopper 44. Mixture is brought to necessary humidity in the hopper 44 equipped with raw material drying system and magnetic trap for metal inclusions; accidentally fallen metal inclusions are removed. Mixture of synthetic raw material is fed from hopper 44 into screw and cylinder zone 45 of extruder for compacting and warming up. Then warmed up synthetic raw material is converted to melt for forming reinforcement layer of five-layer film. The obtained melt is fed under pressure from screw and cylinder zone 45 into filter unit 46 where unwanted inclusions are filtered from melt. Filtered melt proceeds from filter unit 46 through connector 47 to the channel of adapter-distributor 14, corresponding to reinforcement layer. Melt proceeds from the channel of reinforcement layer of adapter-distributor 14 to channel for forming reinforcement layer of five-layer die 15. All five layers of melt come out simultaneously from bushing part of five-layer die 15 without mixing but joined together. Melts will be distributed in the following manner: external layer - middle layer - reinforcement layer - middle layer - external layer. Melt obtained through such a method is fed to bath 24 filled with cooling water. Cooled-down melt in the form of film is guided closer to the bottom part of bath 24 through stationary shafts 25 for increasing path and as a result, good film cooling. Then the obtained film is passed through water expression roll unit 26 with rubber coating that removes water from film surface. Residual moisture is removed on pipes 27 for moisture elimination from film surface. Film is fed to the group of take-up shafts 31 through by-pass roll 28, and then through by-pass rolls 30. Film is easily cut into strips of the given width by means of blades on cutting unit 29 as film is stretched between rolls 26 and 31; that is why five-layer flat strips proceed to by-pass rolls 31. Then flat strips are subject to the process of multiple stretching. Strips are directed from take-up rolls 31 through stretching furnace 32 to the group of stretching rollers 34 of roller unit 33. Air is warmed up in the furnace 32 through heating elements and fed to strip passage space. Rotating blades in furnace make air circulate from heating area to strip passage space and back. Rotation speed of stretching rollers group 34 is several times higher than speed of by-pass rolls 31; that is why film stretching is performed in hot air environment of stretching furnace 32 with increase of length and reduction of thickness depending on stretching rate. Now therefore strips are converted to fibers with molecular chains oriented in longitudinal direction that gives them additional strength. Fibers produced in the stretching process have inner stresses of molecular structure that are relieved through shrinkage process. That is why fibers are fed from group of stretching rollers 34 to hot rolls group 35 and then to cold rolls group 36. Rotation speed of hot rolls group 35 equals to rotation speed of stretching rollers 34, and rotation speed of cold rolls group 36 is by 5% lower than rotation speed of hot rolls group 35. On contacting with surface of hot rolls group, fiber is heated, while speed difference between rolls 35 and 36 facilitates process of relieving inner stresses of fiber molecular structure. In such a manner process of fiber shrinkage is performed; fiber is reduced in length by 5%. On contacting with surface of cold rolls group 36 fiber is cooled down; hence molecular structure of fiber is stabilized finally. Finished fibers are fed to winding station 37, where winding fibers to cores is performed through winders 38. Now therefore five-layer flat fibers wound on cores are obtained.

Application of new extrusion method for producing flat fiber from synthetic raw material in industry and other fields would allow sharp cost reduction of flat synthetic fibers produced through such a method without reduction of strength properties. Advantages of production and application of flat multilayer synthetic fibers produced through new extrusion method are as follows. Particles of calcium carbonate (CaCO₃) or other additives, for example talc, are absent on the glazed surface of film that prevents water retention, as in this case additive, for example calcium carbonate (CaCO₃), is brought into internal layer protected by external layers. Fiber produced through such a method does not possess significant abrasive properties, as it does within known methods, and this resulted in additional wear of equipment parts, with which fiber comes into contact in future, for example, working parts of weaving machine. On application of novel production method to synthetic flat fibers, the safety of weaving line will be also increased due to exclusion of damaging the electrical installation. Absence of the so called chalk dust will improve sanitary and hygiene occupational conditions of personnel, and in general will improve longevity of the equipment. Introduction of greater amounts of various additives is possible, for example calcium carbonate (CaCO₃), with the aim of saving expensive polymer. Application of less amount of expensive colour superconcentrate is possible due to its introduction only into external layers. Moreover, each of external layers can be essentially thinner compared to internal layer. It should be also noted that fibers with various properties depending on requirements can be produced through this method, making them multilayer with unique properties of each layer. And it makes new method for producing flat synthetic fibers more important, as specified properties of produced fibers will be determined depending on actual requirements; after all, extremely high strength of fiber is not always practically required.

## Claims

1. Extrusion method for producing flat fiber from synthetic raw material including formation of at least two melts with various properties, and distribution of these melts at least over three layers for the formation of synthetic film, cooling this film, cutting it into strips and stretching of cut strips for the formation of fibers, and winding fibers produced through such a method on cores; it differs by the fact that synthetic raw material is used in the form of granules, powder, or agglomerate, and the produced film is cooled in the bath with water, whereas removal of water from film surface is performed after cooling down, and interior layer is formed with filler on the calcium carbonate basis in quantity of 0.1-50% by weight of main raw material of interior layer, whereas one of melts is formed with use of polypropylene with melt flow rate (MFR) less than 2.8 g/10.0 min according to standard method for melt flow rate determination of thermoplastic polymers by means of extrusion plastometer (ASTM 1238-90b).

2. Extrusion method for producing flat fiber from synthetic raw material as in Item 1 differs in the fact that cooling melted mass is performed on the cooling shafts.

3. Extrusion method for producing flat fiber from synthetic raw material as in Item 1 differs in the fact that interior layer is formed with filler on the basis of organic calcium carbonate.

4. Extrusion method for producing flat fiber from synthetic raw material as in Item 1 differs in the fact that one of the melts is formed with colouring agent, whereas it is distributed uniformly over external layers.

5. Extrusion method for producing flat fiber from synthetic raw material as in Item 4 differs in the fact that colouring agent quantity of 0.1-15.0% of weight of main raw material is included into the external layer.

6. Extrusion method for producing flat fiber from synthetic raw material as in Item 1 differs in the fact that one of the melts is formed with reinforcement additives.

7. Extrusion method for producing flat fiber from synthetic raw material as in Item 6 differs in the fact that one of the melts is formed of polymer with higher breaking characteristics compared to polymer used during production of other layers.

8. Extrusion method for producing flat fiber from synthetic raw material as in Item 1 differs in the fact that strips fibrillation is performed after film cutting into strips.

9. Extrusion method for producing flat fiber from synthetic raw material as in Item 1 differs in the fact that strips fibrillation and subsequent fiber twisting are performed after film cutting into strips.

10. Extrusion method for producing flat fiber from synthetic raw material as in Item 1 differs in the fact that strips fibrillation and subsequent fiber oiling are performed after film cutting into strips.

11. Extrusion method for producing flat fiber from synthetic raw material as in Item 1 differs in the fact that strips stretching is performed in several stages.

12. Extrusion method for producing flat fiber from synthetic raw material as in Item 1 differs in the fact that fiber is subject to forced shrinkage after stretching.

13. Extrusion method for producing flat fiber from synthetic raw material as in Item 12 differs in the fact that forced shrinkage is performed in several stages.
